(19) Europäisches Patentamt
European Patent Office
Office européen des brevets

(11) **EP 2 337 699 B1**

(12) **EUROPÄISCHE PATENTSCHRIFT**

(45) Veröffentlichungstag und Bekanntmachung des Hinweises auf die Patenterteilung:
**19.12.2018 Patentblatt 2018/51**

(21) Anmeldenummer: **09782851.1**

(22) Anmeldetag: **10.09.2009**

(51) Int Cl.:
**B60K 6/48** *(2007.10)* **B60W 10/06** *(2006.01)*
**B60W 10/08** *(2006.01)* **B60W 10/02** *(2006.01)*
**B60W 20/00** *(2016.01)*

(86) Internationale Anmeldenummer:
**PCT/EP2009/061730**

(87) Internationale Veröffentlichungsnummer:
**WO 2010/043455 (22.04.2010 Gazette 2010/16)**

(54) **VERFAHREN ZUR VERFÜGBARKEITSERHÖHUNG BEI HYBRIDFAHRZEUGEN**

METHOD FOR INCREASING THE AVAILABILITY OF HYBRID VEHICLES

PROCÉDÉ PERMETTANT UN ACCROISSEMENT DE DISPONIBILITÉ POUR DES VÉHICULES HYBRIDES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **16.10.2008 DE 102008042887**

(43) Veröffentlichungstag der Anmeldung:
**29.06.2011 Patentblatt 2011/26**

(73) Patentinhaber: **Robert Bosch GmbH**
**70442 Stuttgart (DE)**

(72) Erfinder:
• **NIEMANN, Holger**
**71640 Ludwigsburg (DE)**
• **HEYL, Andreas**
**71640 Ludwigsburg (DE)**

(56) Entgegenhaltungen:
**WO-A-2009/121660 US-A1- 2007 276 556**

**Beschreibung**

Stand der Technik

Die Erfindung geht aus von Steuermechanismen zum Betrieb von Verbrennungskraftmaschinen und Elektromotoren, die kombiniert als Hybridantriebe eingesetzt werden. Die kombinierte Verwendung von elektrischen Maschinen und Verbrennungsmotoren in einem Hybridantrieb ermöglicht einen höheren Wirkungsgrad bei der Bewegung von Fahrzeugen sowie eine flexible Anpassung des Antriebsaggregats an den gewünschten Fahrmodus. Insbesondere erlaubt ein Hybridantrieb die effiziente Nutzung des Verbrennungsmotors durch die Speicherung von elektrischer Energie, die über die elektrische Maschine als Generator gewonnen wurde, sowie die Wiedergewinnung, d. h. die Rekurperation von Bewegungsenergie beim Abbremsen.

Zum einen wird bei Hybridantrieben der Verbrennungsmotor neben der elektrischen Maschine zum Antrieb verwendet und zum anderen bestehen Hybridantriebskonzepte, in denen die elektrische Maschine als Starter zum Anlassen des Verbrennungsmotors eingesetzt wird. Auf diese Weise lassen sich ein zusätzlicher Starter-Elektromotor und dessen Ansteuerung einsparen.

Gegenüber üblichen konventionellen Verbrennungsmotorantrieben erfordern Hybridantriebe eine komplexere Steuerung, da ein Verbrennungsmotor zusammen mit einer elektrischen Maschine betrieben werden muss, um den Antrieb vorzusehen und eine mehrschichtige Steuerung für die elektrische Maschine, da diese sowohl als Fahr-Antriebselement als auch als Anlasser bzw. als Starter eingesetzt wird.

Bei bekannten Hybridantrieben, bei denen die elektrische Maschine als Starter für den Verbrennungsmotor verwendet wird, wird der Betrieb der elektrischen Maschine überwacht und bei erkannten Fehlern aus Sicherheitsgründen eingeschränkt oder abgestellt. Es wird gemäß des Standes der Technik Steuerungssysteme verwendet, die Ansteuerung, die Regelung und die Sensoren der elektrischen Maschine sowie den Betrieb der elektrischen Maschine selbst überwachen und gegebenenfalls die elektrische Maschine abschalten. Üblicherweise wird die elektrische Maschine sofort abgeschaltet, wenn ein Fehler erkannt wird.

Bei der Überwachung von Motorsteuergeräten wird nach EGAS das Drei-Ebenen-Prinzip eingesetzt. In einer ersten Ebene erfolgen eine Momentenkoordination, die Berechnung von Soll- und Ist-Momenten sowie verschiedene Sensor-Plausibilisierungsroutinen.

In einer zweiten Ebene erfolgt eine Funktionsüberwachung, mit der die Richtigkeit beziehungsweise das korrekte Ablaufen der Funktionen in der ersten Ebene überwacht wird. Die Funktionsüberwachung, die in der zweiten Ebene abläuft, umfasst einen Momentenvergleich, mit dem Rechenfehler in der ersten Ebene aber auch dort aufgetretene Sensorfehler festgestellt werden können.

Eine weitere, dritte Ebene, umfasst eine Rechnerüberwachung, mit der das korrekte Arbeiten der beteiligten Rechnerbausteine des Motorsteuergeräts überwacht wird.

Im Rahmen dieses Drei-Ebenen-Konzepts folgt eine Fehlerreaktion meist in mehreren Stufen. Zunächst wird der Fehler "entprellt". Nach der Endeckung eines Fehlers muss eine Fehlerreaktionszeit eingehalten werden, nach deren Ablauf der sichere Zustand eingenommen sein muss. Statt auf einen entdeckten Fehler sofort zu reagieren, kann diese Zeit auch genutzt werden, ein selbstständiges Heilen des Fehlers, so zum Beispiel einen durch EMV verursachten Bitträger, abzuwarten. Die Wartezeit, während der ein selbstständiges Heilen des Fehlers erfolgt, wird als Entprellung bezeichnet, welche die Verfügbarkeit erhöht. In einer weiteren Stufe wird das Steuergerät zurückgesetzt (Reset-Signal), die Endstufen werden abgeschaltet und das Steuergerät wird neu initialisiert.

In einer dritten Stufe kann ein eingeschränkter Ersatzbetrieb der Endstufen des Steuergeräts erfolgen, während in einer vierten Stufe ein irreversibles Ausschalten des Systems erfolgt. Das irreversible ausgeschaltete System kann nur noch durch Zündung Aus/Ein erneut gestartet werden. Bei einem dauerhaften Fehler bleibt das System auch nach dem Absetzen eines Zündsignals deaktiviert.

Bei Hybridantriebssystemen, bei denen mehrere Steuergeräte zum Einsatz kommen, so zum Beispiel ein Primär-Motor, der ein Primär-Motor-Steuergerät sowie ein Sekundär-Motor-Steuergerät wird das oben stehend skizzierte Drei-Ebenen-Konzept ebenfalls auf jedem einzelnen Steuergerät umgesetzt. Die Fehlerreaktion kann dabei bei jedem Steuergerät eine andere sein, so zum Beispiel die vierte Stufe, d. h. ein sofortiges irreversibles Abschalten des Sekundär-Motors nach sich ziehen, nach vorhergehendem Entprellen des Fehlers.

Bei einem Hybridfahrzeug, bei dem der Sekundär-Motor so zum Beispiel der elektrische Antrieb auch als Starter-Generator des Primär-Motors zum Beispiel des Verbrennungsmotors eingesetzt wird, kann ein Fehler im Sekundär-Motor zum Ausfallen des GesamtSystems führen: Wenn das Fahrzeug im Moment des Auftretens eines Fehlers im Steuergerät des Sekundär-Motors allein von diesem betrieben wird und der Primär-Motor, d. h. der Verbrennungsmotor ausgeschaltet ist, reicht die Zeit bis zum Einsetzen der Fehlerreaktion zum Beispiel Stufe 4 sofortiges irreversibles Abschalten der Endstufe des Sekundär-Motors nicht mehr aus, um davor noch den Primär-Motor zu starten. Und bei erneutem Start des Fahrzeugs über ein Zündsignal Aus/Ein können dauerhafte Fehler im Steuergerät des Sekundär-Motors dazu führen, dass fehlerhafte Selbsttests des Steuergeräts auftreten, deren Folge ist, dass die Überwachung einen Start des Sekundär-Motors nicht mehr zulässt. Somit kann auch der Primär-Motor, d. h. die Verbrennungskraftmaschine, die eigentlich funktionsbereit wäre, nicht mehr gestartet werden. Es kommt zu einem Liegenbleiben des Fahrzeugs aufgrund von Fehlern im Sekundär-Motor obwohl der Primär-Motor, d. h. die Verbrennungskraftmaschine eigentlich fehlerfrei funktionierte.

Nach WO 2009/121660 A2 sind Verfahren und Vorrichtungen zur Steuerung einer elektrischen Maschine eines Hybridantriebs bei erhöhter Verfügbarkeit bekannt. Dabei wird eine elektrische Maschine, die beispielsweise aufgrund von Fehlern in der Steuerung, in der Sensorik oder in der elektrischen Maschine selbst nicht mehr als Antriebsaggregat geeignet ist, als Starter beziehungsweise Anlasser eines Verbrennungsmotors benutzt. Dabei wird mit einem Steuergerät eine Elektromotorsteuerung überwacht, das Fehler im Elektromotor unterscheidet. Die unterschiedenen Fehler werden in Fehlergrade eingeteilt, anhand derer festgelegt ist, ob ein Betrieb des Elektromotors als Anlasser ausgeschlossen ist. Der Nachteil dieses Verfahrens besteht darin, dass eine Reaktion des Verfahrens lediglich technische Parameter der elektrischen Maschine berücksichtigt, und die Fahrsituation ignoriert. Eine derartige Unflexibilität senkt die Effizienz des Verfahrens.

Aus US 2007/0276556 A1 ist ein Verfahren zum Starten eines Verbrennungsmotors in ein Hybridfahrzeug bekannt. Dabei wird der Ladezustand einer Hochvolt-Batterie überwacht, die mit einem Generator, der auch als Anlasser dient, verbunden ist. Wird ein Ladezustand der Hochvolt-Batterie festgestellt, der keinen Anlassvorgang gewährleistet, wird mittels eines Transformators elektrische Leistung aus einer Niedervolt-Batterie in ein Hochspannungleitungsnetz eingespeist. Die von der Niedervolt-Batterie kommende tranformierte elektrische Leistung erlaubt dann mittels des Generators einen Anlassvorgang durchzuführen. Ein Nachteil dieses Verfahrens besteht darin, dass es keine Möglichkeit bietet, auf andere Betriebseinwirkungen eines Hybridfahrzeugs einzuwirken als einen niedrigen Ladestand einer Hochvolt-Batterie. Die Verfügbarkeit eines Hybridfahrzeug wird durch das Verfahren nur geringfügig erhöht.

Offenbarung der Erfindung

Der vorliegenden Erfindung liegt die Aufgabe zugrunde, die Verfügbarkeit eines Hybridantriebs zu erhöhen.

Der erfindungsgemäß vorgeschlagenen Lösung folgend wird der Betrieb eines Hybridantriebs an einem Fahrzeug auch mit einer elektrischen Maschine möglich, die sich möglicherweise nicht mehr als Antriebsaggregat für den Fahrbetrieb eignet, jedoch zum Beispiel als Starter oder Generator durchaus noch geeignet ist. Mit der erfindungsgemäß vorgeschlagenen Lösung und dem erfindungsgemäß vorgeschlagenen Verfahren lassen sich liegen gebliebene Fahrzeuge mit Hybridantrieb aktivieren, deren elektrische Maschine zwar nicht mehr als Antrieb verwendet werden kann, deren Verbrennungsmotor jedoch prinzipiell betriebsbereit ist. Die Stilllegung des gesamten Hybridantriebs bei Fehlern in dem elektrischen Antrieb, d. h. an der elektrischen Maschine, wird mit der erfindungsgemäß vorgeschlagenen Lösung überwunden.

Der erfindungsgemäß vorgeschlagenen Lösung folgend, besteht nunmehr die Möglichkeit, die elektrische Maschine, die sich zwar aufgrund des Fehlers nicht mehr als Antriebskomponente eignet, trotzdem in einer anderen Funktion, zum Beispiel als Anlasser beziehungsweise als Starter der Verbrennungskraftmaschine, d.g. des Primär-Motors zu betreiben. Dadurch lässt sich auch bei fehlender elektrischer Antriebskomponente der Hybridantrieb aktivieren, indem der Verbrennungsmotor mit der defekten, d. h. nicht zum Antrieb tauglichen elektrischen Maschine gestartet wird.

Der erfindungsgemäß vorgeschlagenen Lösung folgend, wird die Fehlerreaktion des Sekundär-Motors, d. h. des elektrischen Antriebs des Hybridantriebs von der aktuellen Fahrzeugsituation des mit Hybridantrieb ausgestatteten Fahrzeugs abhängig gemacht. Befindet sich dieses in einem Betrieb, in dem es nur vom Sekundär-Motor, d. h. der elektrischen Maschine angetrieben wird, wird die Fehlerreaktion derart angepasst, dass ein Start des Primär-Motors, d. h. der Verbrennungskraftmaschine vor dem Abstellen des Sekundär-Motors, d. h. des elektrischen Antriebs noch möglich ist.

Durch Vorgabe geeigneter Bedingungen, unter denen diese abgeänderte Fehlerreaktion noch erlaubt ist, bleibt die Sicherheit des mit dem Hybridantrieb ausgestatteten Fahrzeugs gewährleistet.

Tritt - um ein Beispiel zu nennen - die Situation ein, dass über Steuergeräte des Sekundär-Motors, d. h. des elektrischen Antriebs ein dauerhafter Fehler auftritt, führt dies zu einem Abschalten der Endstufen.

Je nach aktuellem Betriebszustand gibt es mehrere mögliche Reaktionen der Fahrzeugsteuerung auf diesen Fehler:

1) Das Fahrzeug fährt hybridisch, d. h. es erfolgt ein Antrieb sowohl durch den Primär-Motor (Verbrennungskraftmaschine) als auch durch den Sekundär-Motor (elektrische Maschine).

2) Das Fahrzeug fährt generatorisch, dies bedeutet, dass der Primärmotor, d. h. die Verbrennungskraftmaschine einen Energiespeicher über die Sekundärmaschine, d. h. den elektrischen Antrieb auflädt, so zum Beispiel einen Energiespeicher in Form einer Batterie bzw. eines Druckspeichers.

3) Das Fahrzeug fährt ausschließlich mit dem Sekundär-Motor, d. h. dem elektrischen Antrieb und der Primär-Motor, d. h. die Verbrennungskraftmaschine ist abgeschaltet.

In den Fällen 1) und 2) führt das Abstellen des Sekundär-Motors, d. h. des elektrischen Antriebs nicht unmittelbar zu einer Verfügbarkeitsreduzierung des Hybridantriebs. Das Fahrzeug kann weiter über den Primär-Motor angetrieben werden, der jetzt jedoch ohne Unterstützung des Sekundär-Motors arbeitet. Dies bedeutet, dass die Betriebszustände Rekuperation und Generation nicht mehr erfolgen können. In den Betriebszuständen 1) und 2) ist der Primär-Motor, d. h. die Verbrennungskraftmaschine, aktiv, so dass keine Maßnahmen erforderlich sind.

Im Falle 3), d. h. bei einem rein über den Sekundär-Motor angetriebenem Fahrzeug bei abgeschalteter Verbrennungskraftmaschine würde das Abstellen des Sekundär-Motors im Fehlerfall durch die Überwachungsfunktion unmittelbar zu einem Stillstand des Fahrzeugs führen. Durch die erfindungsgemäß vorgeschlagene Lösung ist ein erneutes Starten der abgeschalteten Primärmaschine durch den Sekundär-Antrieb möglich, so dass vermieden wird, dass das Fahrzeug liegen bleibt.

Im letztgenannten Falle 3) ist denkbar, dass der Start des Primär-Motors, d. h. der Verbrennungskraftmaschine unter bestimmten Bedingungen, die zu plausibilisieren sind, noch vor dem Abstellen des Sekundär-Motors, d. h. des elektrischen Antriebs erfolgt: Bei Fahrzeugen beziehungsweise Elektrofahrzeugen zu denen hybridangetriebene Fahrzeuge zu rechnen sind, gelten dabei folgende sicherheitsrelevante Vorschriften:

A) Es darf keine ungewollte Beschleunigung auftreten; es darf kein ungewolltes Moment, welches größer ist als ein definierter Bruchteil des Maximalmoments länger als eine definierte Zeitspanne auf ein angetriebenes Rad einwirken und

B) eine ungewollte Bewegung ist insoweit auszuschließen, als sich ein Elektro-Fahrzeug aus dem Stand durch einen Fehler gemäß der Vorschrift ECE R-100 nicht mehr als 10 cm bewegen darf.

Unter diesen beiden sicherheitsrelevanten Randbedingungen kann unter den nachfolgend aufgeführten Bedingungen ein Start des Primär-Motors, d. h. der Verbrennungskraftmaschine durch den Sekundär-Motor, d. h. den elektrischen Antrieb unter Gewährleistung der Sicherheit erfolgen, wenn folgende Bedingungen erfüllt sind:

Der Primär-Motor wird gestartet und der Triebstrang zwischen den Motoren, d. h. zwischen dem Primär-Motor und dem Sekundär-Motor wird geschlossen. Dies erfolgt über eine Kupplung. Der Primär-Motor muss während der Startprozedur einen größeren Bruchteil der Drehmomentendifferenz zwischen dem Fahrerwunsch und dem aktuell vom Sekundär-Motor und Primär-Motor stellbaren, betriebszustandsabhängigen maximalen Moment aufnehmen können, so dass dem Sicherheitskriterium A) Rechnung getragen werden kann. In diesem Zusammenhang ist zu berücksichtigen, dass das Drehmoment stark drehzahlabhängig ist. Ein denkbares Sicherheitskriterium könnte zum Beispiel lauten:

$$\frac{\left(Maximales\ Moment_{EM} - Verluste\ Triebstrang\right)}{\left(Maximales\ Moment_{EM} + Maximales\ Moment_{VKM}\right)} \leq 20\%$$

Der Triebstrang kann hierbei den Primär-Motor in der Drehmoment-Absorption unterstützen, indem er dazu beiträgt, dass weniger als der geringere Bruchteil der Drehmomentendifferenz an den Rädern ankommen, was zum Beispiel durch eine offene Wandlerkupplung vor dem Getriebe möglich ist, die bei niedrigen Drehzahlen nur einen kleinen Teil des ankommenden Drehmoments weitergeben kann, so zum Beispiel bei einem Elektromotor als Sekundär-Motor bei niedrigerem Drehzahlenabsatz. Des Weiteren ist zur Erfüllung des Sicherheitskriteriums A) eine zusätzliche zuverlässige Plausibilisierung des Drehmoments des Sekundär-Motors im Fahrzeugführungsrechner sicherzustellen, so dass in jedem Falle ausgeschlossen ist, dass ein überhöhtes Moment an den Rädern über eine nichtakzeptierbare Zeitdauer hinweg auftritt.

Hinsichtlich des Sicherheitskriteriums B), wonach sich ein Elektrofahrzeug aus dem Stand durch einen Fehler nicht mehr als 10 cm bewegen darf, ist Bedingung, dass die Fahrzeuggeschwindigkeit nicht > 0 beziehungsweise eine Schwelle ist. Der Start des Primär-Motors, d. h. der Verbrennungskraftmaschine, kann entweder nach Ablauf einer Fehlerentprellung des Sekundär-Motors erfolgen, oder - vorbeugend - während der Entprellung des Fehlers. Nach einem erfolgreichen Startvorgang des Primär-Motors, d. h. der Verbrennungskraftmaschine wird der Sekundär-Motor abgestellt und ein Liegenbleiben des Fahrzeugs vermieden, da innerhalb des Hybridantriebs der Primär-Motor, d. h. die Verbrennungskraftmaschine zur Verfügung steht.

Kurze Beschreibung der Zeichnungen

Anhand der Zeichnungen wird die Erfindung nachstehend eingehender beschrieben:
Es zeigt

Figur 1    ein Schaubild einer schematisch wiedergegebenen Darstellung eines Hybridantriebs im Normalbetrieb (a) und in einem Zustand, der bei einem festgestellten Fehler vorliegt (b).

Figur 2    Ein Ablaufdiagramm einer Ausführung des erfindungsgemäß vorgeschlagenen Verfahrens.

Ausführungsvarianten

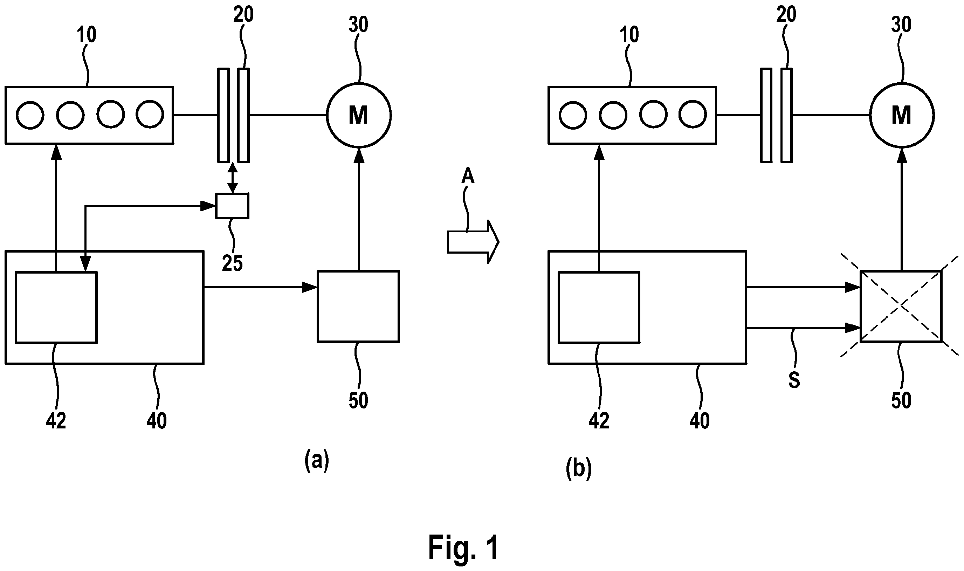

In der Figur 1 ist ein Schaltbild einer Steuerung eines Parallelhybridantriebs in zwei Zuständen (a) und (b) dargestellt. Die Figur 1 zeigt einen Verbrennungsmotor 10, d. h. den Primär-Motor, der über eine Trennkupplung 20 mit einem Elektromotor 30, d. h. dem Sekundär-Motor, verbunden ist. Je nach Ansteuerung und Kupplungszustand der Trennkupplung 20 überträgt der Verbrennungsmotor 10 und/oder der Elektromotor 30 mechanische Energie auf den Antrieb, d. h. einen nicht dargestellten Triebstrang. Andernfalls überträgt der Verbrennungsmotor 10 zur Gewinnung elektrischer Energie Rotationsenergie auf den Elektromotor 30, was vorzugsweise bei abgekoppeltem Antrieb erfolgt oder der Elektromotor 30 überträg in umgekehrter Richtung über die Trennkupplung 20, die in diesem Fall geschlossen steht, mechanische Energie an den Verbrennungsmotor 10, um diesen zu starten. Wie bereits erläutert, sieht das Parallelhybridantriebskonzept ebenso vor, mechanische Energie, d. h. kinetische Rotationsenergie, vom Elektromotor 30 an den Verbrennungsmotor 10 zur Unterstützung des Antriebs zu übertragen.
Ein Steuergerät 40 ist mit dem Verbrennungsmotor 10 und über ein Elektromotor-Steuergerät 50 mit dem Elektromotor 30 verbunden. Beide Verbindungen dienen dazu, eine Momentenanforderung, beispielsweise in Form eines Signals, an den Verbrennungsmotor 10 und an den Elektromotor 30, vorzugsweise über eine entsprechende Steuerschaltung zu übertragen. Das Steuergerät 40 ist zur Steuerung des gesamten Hybridantriebs vorgesehen und umfasst ein Verbrennungsmotor-Steuergerät 42. Zur Steuerung des Elektromotors 30 ist ein Elektromotor-Steuergerät 50 vorgesehen, das extern zum Hybridsteuergerät angeordnet ist.
In alternativen, hier zeichnerisch nicht dargestellten Ausführungsvarianten, können die Steuerkomponenten, die den einzelnen Antriebsmotoren zugeordnet sind, das Verbrennungsmotor-Steuergerät 42 und das Elektromotor-Steuergerät 50 auch beide innerhalb des Steuergeräts 40 des Hybridantriebs vorgesehen sein oder auch beide außerhalb des Steuergeräts 40 vorgesehen sein. Des Weiteren kann eines der beiden erwähnten Steuergeräte 42, 50 im Steuergerät 40 für den Hybridantrieb untergebracht sein wie es in Figur 1 dargestellt ist. Das Gesamtsteuergerät 40 kann als Doppelfunktions-Steuerungseinheit der erfindungsgemäßen Steuerung aufgefasst werden. In der Figur 1(a) stellen die Pfeile die Übertragungsrichtung der Momentenanforderung dar. Ebenso stellen die entsprechenden Pfeile in der Figur 1(b) die entsprechende Übertragung dar, wobei jedoch der untere Pfeil zwischen dem Steuergerät 40 und dem Elektromotorsteuergerät 50 ein Signal zur Deaktivierungsüberwachung überträgt. Die Übertragungsrichtung entspricht im Allgemeinen der Pfeilrichtung.
Im in Figur 1(a) dargestellten Normalbetrieb, überträgt das Steuergerät 40 die Momentenanforderung an den Elektromotor 30 über das Elektromotorsteuergerät 50. Tritt jedoch ein Fehler in dem Elektromotor 30 auf, so wird dies vom Elektromotor-Steuergerät 50 erfasst, wodurch, gemäß des Drei-Ebenen-Konzepts der Elektromotor 30 zunächst vollständig ausgeschaltet werden würde. Jedoch ermöglicht es das erfindungsgemäß vorgeschlagene Verfahren und die erfindungsgemäß vorgeschlagene Vorrichtung, die aus dem Fehler folgende Sperrung beziehungsweise Blockierung des Elektromotors 30 zumindest temporär aufzuheben, um diesen möglicherweise für einen längeren Fahrbetrieb nicht mehr geeigneten Antrieb als Starter für den möglicherweise abgeschalteten Verbrennungsmotor 10, d. h. den Primärmotor einzusetzen.
Hierzu wird in der Schaltung gemäß Figur 1 ein zusätzliches Deaktivierungsüberwachungssignal S von der Steuerung 40 an das Elektromotorsteuergerät 50 übertragen, um die vom Elektromotorsteuergerät 50 vorgesehene Sperrung für den Startervorgang durch den Elektromotor 30, d. h. den Sekundär-Motor aufzuheben. Somit wird die von dem Elektromotor-Steuergerät 50 vorgesehene Sperrung aufgehoben, wie es durch die gestrichelten gekreuzten Linien des Elektromotor-Steuergeräts 50 in Figur 1(b) dargestellt ist.
Die Aufhebung der Steuerung, die das Elektromotor-Steuergerät 50 vorsieht, ist jedoch nur als temporär anzusehen, so dass die gestrichelten, gekreuzt verlaufenden Linien nicht für den gesamten Antriebsmodus des Elektromotors 30, d. h. des Sekundär-Antriebs gelten. Dies wäre bei einem Steuergerät für den Elektromotor 30 gemäß des Standes der Technik bei Auftreten eines Fehlers unterbunden.
Das Signal S stellt daher ein "Override"-Signal dar, das jedoch nur kurzfristig das Steuergerät 50 für den Elektromotor 30 außer Kraft setzt, um zumindest eine kurze Starterphase des Elektromotors 30 zu ermöglichen, so dass der abgeschaltete Verbrennungsmotor 10, d. h. der Primär-Antrieb gestartet werden kann. Das Signal S kann über eine eigene Steuerungsleitung übertragen werden oder kann einen eigenen logischen Kanal beanspruchen, der das Steuergerät 40 mit dem Elektromotor-Steuergerät 50 verbindet.

Ferner kann die Steuerung 40, das Elektromotor-Steuergerät 50 oder beide Steuergeräte 40, 50 über eine Ausgabeeinheit oder über eine Eingabeeinheit beziehungsweise eine Ausgabeeinheit verfügen, die einen dauerhaften Aktivzustand des Aufhebungssignals S (Override-Signal) verhindert, beispielsweise ein RC-Glied, ein monostabiler Flip-Flop oder ein entsprechendes Software-Segment, das in der Steuerung 40 beziehungsweise im Elektromotor-Steuergerät 50 abläuft. Bei dem Signal S kann es sich um ein Deaktivierungsüberwachungssignal handeln, beispielsweise ein Deaktivierungsbit. Das Steuergerät 40 selbst steuert nicht nur die Blockierung der Fehlerreaktion des Elektromotor-Steuergeräts 50 sondern überwacht diese zudem. Eine derartige Überwachung erlaubt die Erfassung des Fehlergrads sowie die Unterscheidung von Fehlern des Elektromotors, die einen Startvorgang zwar noch erlauben von solchen Fehlern, die den Betrieb des Elektromotors auch zum Starten verunmöglichen sollten.

Ferner kann die Steuerung 40 mit der Trennkupplung 20 und gegebenenfalls weitervorzusehenden Kupplungen verbunden sein, um diese anzusteuern und/oder um deren Kupplungsstatus abzufragen.

Der Übergang des in Figur 1(a) dargestellten Zustands in den Zustand, der in der Figur 1(b) dargestellt ist, wird durch ein Fehlersignal beispielsweise durch einen Fehler der am Sekundär-Motor, d. h. am Elektromotor 30 aufgetreten ist, hervorgerufen. Da das Signal S für den Startvorgang die Überwachung des Elektromotor-Steuergeräts 50 aufhebt, wird ein Startvorgang auch bei defektem Elektromotor-Steuergerät 50 möglich. Der mit A bezeichnete Pfeil bezeichnet einen derartigen Übergang, der durch einen Fehler im Elektromotor-Steuergerät 50 hervorgerufen wird. Ferner kann der Pfeil A ein erkannter Fehler im Elektromotor 30 sein, der zwar die Funktion als Antrieb ausschließt, jedoch die Funktion des Elektromotors 30 als Starter des Primär-Motors, d. h. des Verbrennungsmotors 10 noch zulässt. Ferner kann der Übergang A durch die oben aufgeführten Fehlerarten, so zum Beispiel Sensorfehler oder Auswertungsfehler oder Sensorsignal-Übertragungsfehler hervorgerufen werden.

Vorzugsweise werden die Fehler, die den Übergang A auslösen, durch die Steuerung 40 oder durch eine dieser übergeordneten Steuerung erfasst, wobei die Komponente, die den Fehler erfasst, vorzugsweise durch das kurzzeitige Unterbinden der Fehlerreaktion steuert beziehungsweise auslöst.

Die erfindungsgemäß vorgeschlagene Lösung verbessert die Verfügbarkeit eines Hybridantriebs durch eine zustandsabhängig gestaltete Fehlerreaktion. Tritt zum Beispiel im Elektromotor-Steuergerät 50 des Elektromotors 30 der den Sekundär-Motor darstellt, ein dauerhafter Fehler auf, führt dies in der Regel zu einem Abschalten der Endstufen. Je nach aktuellem Betriebszustand gibt es mehrere mögliche Reaktionen der Steuergeräte 42 beziehungsweise 50 auf diesen Fehler. Mögliche Betriebszustände des Fahrzeugs können sein:

1) Das Fahrzeug fährt hybridisch und wird in diesem Falle sowohl durch den Verbrennungsmotor 10 (Primär-Motor) und dem Elektromotor 30 (Sekundär-Motor) angetrieben.

2) Das Fahrzeug fährt generatorisch; dies bedeutet, dass der Primär-Motor, der Verbrennungsmotor 10 Energiespeicher über den Elektromotor 30, den Sekundär-Motor auflädt. Bei den Energiespeichern kann es sich um eine Batterie oder auch um einen Druckspeicher handeln.

3) Das Fahrzeug fährt rein elektromotorisch, was bedeutet, dass der Verbrennungsmotor 10, d. h. der Primär-Motor ausgeschaltet ist.

Im Falle der Betriebszustände 1) und 2) führt das fehlerbedingte Abstellen des Elektromotors 30, d. h. des Sekundär-Motors nicht sofort zu einer Verfügbarkeitsreduzierung des Hybridantriebs. Das Fahrzeug kann in diesem Falle weiter über den laufenden Verbrennungsmotor 10, d. h. den aktivierten Primär-Motor angetrieben werden, der jetzt jedoch ohne Unterstützung des Elektromotors 30, d. h. des Sekundär-Motors betrieben wird. In diesen Betriebszuständen kann bei Auftreten eines Fehlers im Sekundär-Motor eine Rekuperation und eine Generation nicht mehr erfolgen. Es werden gleichzeitig alle hybridischen Funktionen verboten. Der Fahrer des mit dem erfindungsgemäß vorgeschlagenen Hybridantrieb ausgestatteten Fahrzeugs erhält eine Information, so dass dieser eine Werkstatt aufsuchen kann.

Im Betriebszustand 3) führt bei rein elektromotorischem Fahrbetrieb das Abstellen des Sekundär-Motors bei aufgetretenem Fehler durch die Überwachungsfunktion unmittelbar zum Stillstand des Fahrzeugs. Ein Start des Verbrennungsmotors 10, d. h. des Primär-Motors, wäre in diesem Falle ohne die erfindungsgemäß vorgeschlagene Lösung nicht mehr möglich, so dass das Fahrzeug zwangsläufig liegen bliebe.

Für den Fall, der für den Betriebszustand 3), d. h. rein elektromotorisches Fahren kann durch die erfindungsgemäß vorgeschlagene Lösung der Start des stillstehenden Primär-Motors, d. h. des Verbrennungsmotors 10 unter bestimmten Umständen noch vor dem endgültigen Abstellen des Elektromotors 30 erfolgen. Bei Fahrzeugen beziehungsweise Elektrofahrzeugen, zu denen Hybridfahrzeuge zu zählen sind, sind folgende Einschränkungen im Bezug auf die Sicherheit zu beachten:

A) Es dürfen keine ungewollten Beschleunigungen auftreten. Dies bedeutet, dass kein ungewolltes Moment, welches größer ist ein Bruchteil des Maximalmoments länger als eine definierte Zeitspanne (zum Beispiel 1s) auf die Räder wirkt.

B) Es darf keine ungewollte Bewegung auftreten. Dies bedeutet, dass sich ein Elektro-Fahrzeug aus dem Stand aufgrund eines aufgetretenen Fehlers gemäß der Vorschrift ECE R-100 nicht mehr als 10 cm bewegen darf.

Unter Beachtung dieser Randbedingungen A) und B) ergibt sich, dass ein Start des Primär-Motors, d. h. des Verbrennungsmotors 10, unter Gewährleistung der Sicherheit möglich sein kann. Der Verbrennungsmotor 10 wird gestartet und der Triebstrang zwischen den Motoren, d. h. dem als Primär-Motor dienenden Verbrennungsmotor 10 und dem Sekundär-Motor darstellenden Elektromotor 30, durch Schließen einer Trennkupplung geschlossen. Der Primär-Motor, d. h. der Verbrennungsmotor 10, muss während des Startvorgangs den größten Teil, dies bedeutet den größeren Teil der Drehmomentendifferenz zwischen dem Fahrerwunsch und des aktuell vom Elektromotor 30 stellbarem betriebszustandsabhängigen Maximalmoments aufnehmen können. Der Primär-Motor muss ausreichend Drehmoment aufnehmen, so dass eine Gefährdung durch ein zu hohes Drehmoment des Sekundär-Motors ausgeschlossen werden kann, auch wenn dieser sein maximal mögliches Moment stellen würde, was im Falle einer elektrischen Maschine drehzahlabhängig ist. So könnte dem Kriterium A) dadurch gemäß der nachfolgenden Beziehung Rechnung getragen werden:

$$(\text{Maximales Moment}_{EM} - \text{Verluste}) < 1{,}12 \cdot \text{Drehmoment gemäß Fahrerwunsch},$$

wobei eine Momentenabsorption wie oben stehend beschrieben durch den Primär-Motor erfolgen könnte oder auch durch den Triebstrang erfolgen kann.

Der Triebstrang kann hierbei den Primär-Motor, d. h. den Verbrennungsmotor 10, in der Drehmoment-Absorption unterstützen. Dies kann zum Beispiel durch eine offen stehende Wandlerkupplung vor dem Fahrzeuggetriebe ermöglicht werden, die bei niedriger Drehzahl nur einen kleinen Teil des eingehenden Drehmoments weitergibt.

Durch eine zusätzlich implementierbare zuverlässige Plausibilisierung des Drehmoments des Sekundär-Motors, d. h. des Elektromotors 30 im Fahrzeugführungsrechner kann sichergestellt werden, dass kein überhöhtes Moment an den Rädern - über eine nicht akzeptierbare Zeitdauer hinweg - auftritt.

Im Bezug auf die Bedingung B) ist die Bedingung einzuhalten, dass die Fahrzeuggeschwindigkeit nicht > 0 beziehungsweise über einer bestimmten implementierbaren Schwelle liegt. Der Start des Primär-Motors, d. h. des Verbrennungsmotors kann entweder nach Ablauf einer Fehlerentprellung des Sekundär-Motors erfolgen oder bereits - vorbeugend - während der Entprellung des Fehlers.

Nach erfolgreichem Start des Primär-Motors, d. h. des Verbrennungsmotors 10, kann der Sekundärmotor, d. h. der Elektromotor 30, abgeschaltet werden, wobei das Fahrzeug mobil bleibt, auch wenn eine Antriebsquelle des Hybridantriebs defekt oder nur eingeschränkt verfügbar ist. Der kleinere Bruchteil des Maximalmoments kann 10%, 12%, 15% oder auch 20% betragen, die größeren Bruchteile dementsprechend die jeweiligen Differenzen bis zu 100%.

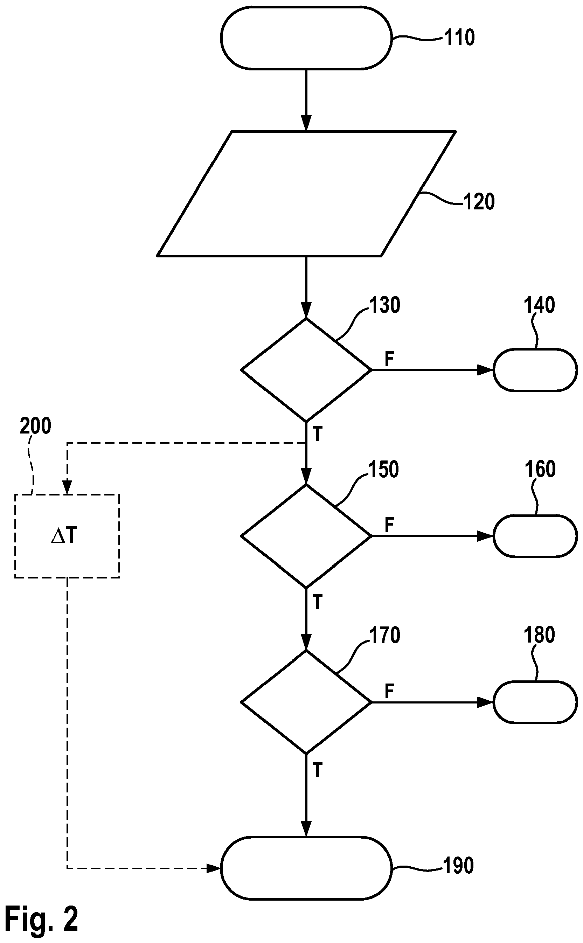

Figur 2 zeigt ein Flussdiagramm, anhand dessen die erfindungsgemäß vorgeschlagene Lösung geschlossen beschrieben wird:
Erfasst in Schritt 130 das Steuergerät 40 einen Fehler T, true, so wird der Elektromotor 30, d. h. der Sekundär-Motor nicht vollständig blockiert, wie es bei Verfahren gemäß des Standes der Technik der Fall wäre, sondern es werden weitere Unterscheidungen getroffen. Nach einem eingegebenen oder durch Vergleich ermittelten Fehler in der Abzweigung 130 T wird in Schritt 150 überprüft, wie schwerwiegend der Fehler ist und ob aus Sicherheitsgründen der Elektromotor 30 vollständig zu blockieren ist oder ob lediglich der Betrieb des Elektromotors 30 als Fahrantriebsaggregat blockiert werden soll. Wird in Schritt 150 ermittelt, dass auch der Betrieb als Starter aufgrund der Schwere des Fehlers zu blockieren ist (F, false, Fehler lässt Betrieb aus Starter nicht zu), dann wird in Schritt 160 der Betrieb des Elektromotors 30 vollständig blockiert.

Wird hingegen in Schritt 150 ermittelt, dass der Fehler den Betrieb des Elektromotors 30 als Starter zulässt (T, true, Fehler lässt Betrieb als Starter zu), wird in Schritt 170 abgefragt, ob der einzustellende Betriebsmodus einen Betrieb als Starter entspricht. Falls dies nicht zutreffend ist (F, false, Betriebsmodus = Betrieb als Fahrantriebsaggregat) dann wird die elektrische Maschine in Schritt 180 blockiert. Eine gegebenenfalls in Schritt 160 eingeleitete Blockade bleibt somit aufrecht. Der Schritt 160 ist somit äquivalent zu Schritt 180. Falls in einem Schritt 170 hingegen ermittelt wird, dass der einzustellende Betriebsmodus einem Betrieb als Starter entspricht (T, true), wird der Elektromotor 30 in Schritt 190 als Starter betrieben. Vorzugsweise wird ferner in Schritt 190 der Betrieb des Elektromotors 30 als Fahrantriebsaggregat blockiert. Eine derartige Blockade kann auch in Schritt 130 vorgesehen werden. In diesem Falle wird die Blockade in Schritt 190 aufrechterhalten.

Der erfindungsgemäß vorgeschlagenen Lösung folgend, wird trotz erfasstem Fehler vom Elektromotor 30 ein zeitlich begrenzter Betrieb als Starter zugelassen, wenn dies die Fehlerart und die Betriebsbedingungen zulassen. Die Implementierung des zeitlich begrenzten Betriebs ist im Flussdiagramm gemäß Figur 2 durch gestrichelte Linien angedeutet. Wird im Schritt 130 erfasst, dass ein Fehler vorliegt, wird ab Erfassen des Fehlers eine vorbestimmte Zeitdauer ΔT vorgesehen, vergleiche Schritt 200, vorzugsweise mittels eines Timers. In Schritt 170 wird ermittelt, dass der Betrieb des Elektromotors 30 als Starter durchgeführt werden soll, so dass vor Einleiten des Schritts 190 (Betrieb als Starter) abgefragt wird, ob die vorbestimmte Zeitdauer noch läuft. Die Abfrage ist in Figur 2 aus Gründen der Klarheit nicht dargestellt. Falls Schritt 170 T (true) ergibt und die Zeitdauer ΔT noch nicht abgelaufen ist, dann wird der Schritt 190 ausgeführt. Ist die Zeitdauer ΔT hingegen abgelaufen, wird der Elektromotor 30 auch für den Startermodus blockiert, was in der Darstellung gemäß Figur 2 nicht dargestellt ist, selbst dann, wenn Schritt 170 T (true) ergibt. Schritt 200 stellt somit eine weitere Vorbedingung für den Ablauf des Schritts 190 dar.

**Patentansprüche**

1. Verfahren zur Erhöhung der Verfügbarkeit eines Hybridantriebs für Fahrzeuge, der zumindest einen Primär-Motor darstellenden Verbrennungsmotor (10) sowie mindestens einen Sekundär-Motor darstellenden Elektromotor (30) aufweist, wobei der mindestens eine Elektromotor (30) sowohl als Anlasser des Verbrennungsmotors (10) als auch als Fahrantriebsaggregat innerhalb des Hybridantriebs betrieben wird, mit nachfolgenden Verfahrensschritten:

   a) Ermitteln (120) zumindest eines Betriebsparameters, der einem Betriebsparameter des mindestens einen Elektromotors (30) entspricht.
   b) Feststellen eines Fehlers (130), wenn zumindest einer des zumindest einen Betriebsparameterwerts nicht einem Betriebsparameter-Normzustand entspricht.
   c) Zumindest teilweises Einschränken (190) des Betriebs des Elektromotors (130) als Fahrantriebsaggregat, wenn ein festgestellter Fehler vorliegt.
   d) Durchführen einer fahrzustandsabhängigen Fehlerreaktion je nach aktuellem Betriebszustand des Hybridantriebs, wobei bei rein elektromotorischem Betrieb des Fahrzeugs und abgestelltem Verbrennungsmotor (10) ein Start des Verbrennungsmotors (10) vor dem Abstellen des Elektromotors (30) durch ein Override-Signal des Elektromotor-Steuergeräts (42) zugelassen wird und bei hybridischem Betrieb des Hybridantriebs bei Antrieb des Fahrzeugs durch Verbrennungsmotor (10) und Elektromotor (30) und bei generatorischem Betrieb des Fahrzeugs, bei dem der Verbrennungsmotor (10) Energiespeicher über den Elektromotor (30) auflädt, der Antrieb des Fahrzeugs über den Verbrennungsmotor (10) erfolgt.

2. Verfahren gemäß Anspruch 1, **dadurch gekennzeichnet, dass** der Start des Verbrennungsmotors (10) unter folgenden Bedingungen erfolgt:

   a) Ungewollte Beschleunigungen werden vermieden, wobei ein Bruchteil des Maximalmoments nicht länger als eine definierte Zeitspanne auf die Räder des Fahrzeugs wirkt.
   b) Es darf keine ungewollte Bewegung des Fahrzeugs von mehr als 10 cm aus dem Stand aufgrund eines Fehlers auftreten, wobei die Fahrzeuggeschwindigkeit nicht > 0 bzw. eine Schwelle ist.

3. Verfahren gemäß der Ansprüche 1 und 2, **dadurch gekennzeichnet, dass** beim Start des Verbrennungsmotors (10) durch den Elektromotor (30) zur Drehmoment-Absorption eine Trennkupplung (20) zwischen den Antrieben (30), (10) geschlossen wird.

4. Verfahren gemäß Anspruch 3, **dadurch gekennzeichnet, dass** der Verbrennungsmotor (10) während des Startvorgangs der überwiegende Teil der Momentendifferenz zwischen Fahrerwunsch und aktuell vom Elektromotor (30) stellbaren Betriebszustand abhängigen Maximalmoments aufnimmt, wobei ein kleinerer Bruchteil des Maximalmoments 10 %, 12 %, 15 % oder auch 20 % betragen kann, größere Bruchteile dementsprechend die jeweiligen Differenzen bis zu 100 %..

5. Verfahren gemäß einem oder mehreren der vorhergehenden Ansprüche, **dadurch gekennzeichnet, dass** ein Triebstrang des Hybridantriebs den Verbrennungsmotor (10) in der Drehmoment-Absorption durch eine offen stehende Wandlerkupplung unterstützt, die bei niedrigen Drehzahlen einen kleinen Teil des ankommenden Drehmoments an die anzutreibenden Räder weitergibt.

6. Verfahren gemäß einem oder mehreren der vorhergehenden Ansprüche, **dadurch gekennzeichnet, dass** eine Plausibilisierung des Drehmoments des Elektromotors (30) durchgeführt wird, die sicherstellt, dass kein überhöhtes Moment an den anzutreibenden Rädern über eine vorgebbare Zeit ansteht.

7. Verfahren gemäß Anspruch 3, **dadurch gekennzeichnet, dass** der Start des Verbrennungsmotors (10) zugelassen wird, wenn die Momentenabsorption so groß ist, dass eine Gefährdung auch bei maximalem Drehmoment des Sekundärantriebs des Sekundär-Motors (30) ausgeschlossen werden kann.

8. Verfahren gemäß Anspruch 6, **dadurch gekennzeichnet, dass** die Plausibilisierung des aktuell gestellten Moments des Sekundär-Motors (30) so sicher ist, dass eine Gefährdung ausgeschlossen werden kann und ein Abschalten beim Überschreiten von definierten Grenzen erfolgt.

## Claims

1. Method for increasing the availability of a hybrid drive for vehicles, which hybrid drive has at least one internal combustion engine (10) which constitutes a primary motor and at least one electric motor (30) which constitutes a secondary motor, wherein the at least one electric motor (30) is operated both as a starter of the internal combustion engine (10) and as a propulsion drive assembly within the hybrid drive, having the following method steps:

   a) determining (120) at least one operating parameter which corresponds to an operating parameter of the at least one electric motor (30) .
   b) detecting a fault (130) if at least one of the at least one operating parameter values does not correspond to an operating parameter normal state.
   c) at least partial limitation (190) of the operation of the electric motor (130) as a propulsion drive assembly if a detected fault is present.
   d) carrying out a driving-state-dependent fault reaction depending on the current operating state of the hybrid drive, wherein in the case of purely electric-motor operation of the vehicle and a shut-down internal combustion engine (10) a start of the internal combustion engine (10) is permitted before the shutting down of the electric motor (30) by means of an override signal of the electric motor control unit (42), and in the case of hybrid operation of the hybrid drive when the vehicle is driven by the internal combustion engine (10) and the electric motor (30) and in the case of generator operating of the vehicle in which the internal combustion engine (10) charges an energy accumulator via the electric motor (30) the drive of the vehicle is provided by means of the internal combustion engine (10).

2. Method according to Claim 1, **characterized in that** the internal combustion engine (10) is started under the following conditions:

   a) undesired accelerations are avoided, wherein a fraction of the maximum torque does not act on the wheels of the vehicle for longer than a defined time period,
   b) there must be no undesired movement of the vehicle of more than 10 cm from the stationary state owing to a fault, wherein the speed of the vehicle is not > 0 or a threshold.

3. Method according to Claims 1 and 2, **characterized in that** when the internal combustion engine (10) is started by the electric motor (30) a clutch (20) between the drives (30), (10) is closed in order to absorb torque.

4. Method according to Claim 3, **characterized in that** during the starting process the internal combustion engine (10) absorbs the greater part of the difference in torque between the driver's request and the maximum torque, dependent on operating state, which is currently settable by the electric motor (30), wherein a relatively small fraction of the maximum torque can be 10%, 12%, 15% or else 20%, and accordingly relatively large fractions can be the respective differences up to 100%.

5. Method according to one or more of the preceding claims, **characterized in that** a drive train of the hybrid drive assists the internal combustion engine (10) in the absorption of torque by means of an open lock-up clutch which, at low rotational speeds, passes on a small part of the incoming torque to the wheels to be driven.

6. Method according to one or more of the preceding claims, **characterized in that** plausibility checking of the torque of the electric motor (30) is carried out, which ensures that excessive torque is not present over a predefinable time at the wheels to be driven.

7. Method according to Claim 3, **characterized in that** the start of the internal combustion engine (10) is permitted if the absorption of torque is so great that a hazard can be ruled out even in the case of maximum torque of the secondary drive of the secondary motor (30).

8. Method according to Claim 6, **characterized in that** the plausibility checking of the currently set torque of the secondary motor (30) is so reliable that a hazard can be ruled out and shutting down takes place when defined limits are exceeded.

**Revendications**

1. Procédé pour augmenter la disponibilité d'un entraînement hybride de véhicule qui présente au moins un moteur (10) à combustion interne constituant un moteur primaire ainsi qu'au moins un moteur électrique (30) constituant un moteur secondaire, le ou les moteurs électriques (30) étant utilisés à la fois comme démarreur du moteur (10) à combustion interne et comme ensembles d'entraînement de roulage à l'intérieur de l'entraînement hybride, le procédé présentant les étapes suivantes :

   a) déterminer (120) au moins un paramètre de fonctionnement qui correspond à au moins un paramètre de fonctionnement du ou des moteurs électriques (30),
   b) constater un défaut (130) si au moins l'une parmi les différentes valeurs des paramètres de fonctionnement ne correspond pas à un état normal du paramètre de fonctionnement,
   c) si une erreur est constatée, restreindre (190) au moins en partie le fonctionnement du moteur électrique (130) comme ensemble d'entraînement de roulage,
   d) exécuter sur l'erreur une réaction dépendant de l'état de roulage selon l'état de fonctionnement en cours de l'entraînement hybride, et lorsque le véhicule fonctionne purement sur son moteur électrique et que le moteur (10) à combustion interne est débranché, permettre un démarrage du moteur (10) à combustion interne avant le débranchement du moteur électrique (30) par un signal d'annulation de l'appareil de commande (42) du moteur électrique, et réaliser l'entraînement du véhicule par l'intermédiaire du moteur (10) à combustion interne lorsque l'entraînement hybride fonctionne de manière hybride, le véhicule étant alors entraîné par le moteur (10) à combustion interne et le moteur électrique (30) et lorsque le véhicule fonctionne en génératrice, le moteur (10) à combustion interne chargeant alors une réserve d'énergie par l'intermédiaire du moteur électrique (30) .

2. Procédé selon la revendication 1, **caractérisé en ce que** le démarrage du moteur (10) à combustion interne s'effectue dans les conditions suivantes :

   a) des accélérations indésirables sont évitées par le fait qu'une fraction de couple maximum n'agit pas sur les roues du véhicule au-delà d'une durée définie,
   b) aucun déplacement indésirable du véhicule sur plus de 10 cm partant de l'arrêt ne peut survenir du fait d'un défaut, la vitesse du véhicule n'étant pas > 0 ou supérieure à un seuil.

3. Procédé selon les revendications 1 et 2, **caractérisé en ce que** lors du démarrage du moteur (10) à combustion interne par le moteur électrique (30), un embrayage de séparation (20) situé entre les entraînements (30), (10) est fermé pour absorber le couple de rotation.

4. Procédé selon la revendication 3, **caractérisé en ce que** pendant l'opération de démarrage, le moteur (10) à combustion interne reprend la partie prédominante de la différence de couple entre le souhait du conducteur et le couple maximum, dépendant de l'état de fonctionnement, qui peut être délivré à ce moment par le moteur électrique (30), une fraction plus petite du couple maximum pouvant valoir 10 %, 12 %, 15 % ou même 20 %, les fractions plus grandes pouvant atteindre 100 % en fonction de la différence particulière.

5. Procédé selon l'une ou plusieurs des revendications précédentes, **caractérisé en ce que** le train d'entraînement de l'entraînement hybride soutient le moteur (10) à combustion interne dans l'absorption du couple de rotation par un embrayage convertisseur en position ouverte qui transmet aux roues à entraîner une petite partie du couple de rotation entrant à bas régime.

6. Procédé selon l'une ou plusieurs des revendications précédentes, **caractérisé en ce qu'**une plausibilisation du couple de rotation du moteur électrique (30) qui assure qu'aucun couple excessif ne soit appliqué pendant une durée prédéterminée aux roues à entraîner est exécutée.

7. Procédé selon la revendication 3, **caractérisé en ce que** le démarrage du moteur (10) à combustion interne est permis lorsque l'absorption de couple est suffisamment grande qu'une mise en danger puisse être exclue même lorsque le moteur secondaire (30) applique le couple de rotation maximum sur l'entraînement secondaire.

8. Procédé selon la revendication 6, **caractérisé en ce que** la plausibilisation du couple effectivement appliqué par le moteur secondaire (30) est suffisamment sûre pour qu'une mise en danger puisse être exclue et qu'un débranchement ait lieu lorsque des limites définies sont dépassées.

Fig. 1

**Fig. 2**

**IN DER BESCHREIBUNG AUFGEFÜHRTE DOKUMENTE**

**In der Beschreibung aufgeführte Patentdokumente**

- WO 2009121660 A2
- US 20070276556 A1